# EUROPÄISCHE PATENTSCHRIFT

(11) **EP 3 120 800 B1**
(45) Veröffentlichungstag und Bekanntmachung des Hinweises auf die Patenterteilung: **01.05.2019**
(21) Anmeldenummer: 16180699.7
(22) Anmeldetag: 22.07.2016
(51) Int. Cl.: A61C 1/18, A61C 5/00

(54) **ZAHNÄRZTLICHES PRÄPARATIONSINSTRUMENT FÜR EIN ABWECHSELND UMKEHRBAR ROTIERENDES WERKZEUG**
DENTAL PREPARATION INSTRUMENT FOR AN ALTERNATELY REVERSIBLE ROTARY TOOL
INSTRUMENT DE PREPARATION DENTAIRE POUR UN OUTIL ROTATIF ALTERNATIVEMENT POUVANT ETRE INVERSE EN ALTERNANCE

(30) Priorität: 24.07.2015 DE 102015214081
(43) Veröffentlichungstag der Anmeldung: 25.01.2017
(73) Patentinhaber: Sirona Dental Systems GmbH, 64625 Bensheim (DE)
(72) Erfinder: Ertugrul, Metin, 63322 Rödermark (DE)
(74) Vertreter: Sommer, Peter

(56) Entgegenhaltungen:
- WO-A2-2013/076106
- DE-A1-102012 217 851
- US-A- 5 569 034
- US-A1- 2013 101 958

## Beschreibung

### Technisches Gebiet

Die Erfindung betrifft ein zahnärztliches Präparationsinstrument für ein abwechselnd umkehrbar rotierendes Werkzeug, das ein Getriebe mit einer ersten Getriebestufe aufweist, die ein umlaufendes Zahnrad sowie ein Zentralrad aufweist, wobei eine Achse des umlaufenden Zahnrads einen Abstand R von einer zentralen Achse besitzt und wobei das umlaufende Zahnrad mit einem exzentrisch angeordneten Zapfen verbunden ist.

### Stand der Technik

Aus WO 2013/076106 A1 ist ein zahnärztliches Präparationsinstrument bekannt, das eine Antriebswelle umfasst, die zur Übertragung einer unidirektionalen Rotationsbewegung dient. Das Präparationsinstrument besitzt eine mechanische Getriebeanordnung, die so ausgebildet ist, dass eine unidirektionale Rotationsbewegung in eine, vorzugsweise simultane, Hub- und Drehbewegung umgewandelt wird, so dass die Werkzeughaltevorrichtung in eine, vorzugsweise simultane, Hub- und Drehbewegung versetzbar ist, wobei die Getriebeanordnung ein Getriebe zur Veränderung, insbesondere Reduktion, der Drehzahl der unidirektionalen Rotationsbewegung und ein Exzentergetriebe aufweist.

Des Weiteren ist aus DE 10 2012 217 851 A1 ein zahnärztliches Präparationsinstrument mit einem abwechselnd umkehrbar rotierenden Werkzeug bekannt, wobei das Präparationsinstrument einen Antrieb für das Werkzeug aufweist. Der Antrieb stellt eine fortlaufend rotierende Bewegung bereit. Vor dem Werkzeug ist ein Getriebe angeordnet, das die fortlaufend vollrotierende Bewegung des Antriebs in eine sich abwechselnd umkehrende rotierende Bewegung übersetzt, welche über mehrere Umkehrungen gesehen fortlaufend ist. Das Getriebe weist eine drehbar gelagerte Eingangswelle und eine drehbar gelagerte Ausgangswelle auf, wobei im Getriebe ein feststehendes Zahnrad angeordnet ist. Auf der Eingangswelle ist ein Träger für ein mit dem feststehenden Zahnrad kämmendes und gegenüber dem Träger in einem Abstand R zu einer Mittelachse des feststehenden Zahnrads drehbar gelagertes Zahnrad vorgesehen, wobei das drehbare Zahnrad mit einem zu seiner Drehachse beabstandeten Kulissenstein verbunden ist, wobei der Kulissenstein in einer mit der Ausgangswelle verbundenen Kulissenführung geführt ist.

Die Aufgabe der vorliegenden Erfindung ist es, ein zahnärztliches Präparationsinstrument bereitzustellen, das einen geringen Verschleiß und damit eine hohe Lebensdauer besitzt.

### Offenbarung der Erfindung

Die Erfindung betrifft ein zahnärztliches Präparationsinstrument nach Anspruch 1. Das erfindungsgemäße zahnärztliche Präparationsinstrument für ein abwechselnd umkehrbar rotierendes Werkzeug, weist ein Getriebe auf, das zwei Getriebestufen umfasst. Dieses Getriebe ist in einem Getriebegehäuse angeordnet. Die erste Getriebestufe enthält ein umlaufendes Zahnrad sowie ein Zentralrad, wobei eine Achse des umlaufenden Zahnrads einen Abstand R von einer zentralen Achse des Präparationsinstruments besitzt. Das umlaufende Zahnrad ist mit einem exzentrisch angeordneten Zapfen verbunden. Die zweite Getriebestufe ist der ersten Getriebestufe in Bezug auf eine Abtriebswelle, an der das Werkzeug angeordnet ist, vorgeschaltet. Der Antrieb des umlaufenden Zahnrads erfolgt durch ein angetriebenes Hohlrad, das Teil der zweiten Getriebestufe ist, sowie einem feststehenden Zentralrad, das auf der zentralen Achse liegt. Über die Verzahnung des Hohlrads sowie des Zentralrads wird bei dem umlaufenden Zahnrad ein Drehmoment eingeleitet. Vorteilhaft bei diesem Präparationsinstrument ist daher, dass das Antriebsmoment über die Verzahnung eingeleitet wird und nicht über Lager. Auf einen Träger im Antriebsstrang, wie er beispielsweise in DE 10 2012 217 851 A1 erforderlich ist, kann verzichtet werden. An dem Zahnrad wirkt somit ein Kräftepaar, bestehend aus dem Hohlrad sowie dem zentralen Zahnrad. Dadurch werden geringe Kippmomente und auch geringere Reaktionskräfte in den Lagern erhalten. Diese reduzierten Lagerkräfte führen letztendlich zu einem reduzierten Verschleiß, wodurch die Lebensdauer des zahnärztlichen Präparationsinstruments deutlich verlängert wird.

Bevorzugt weist die zweite Getriebestufe ein Hohlrad, ein Sonnenrad sowie mindestens ein Planetenrad auf, weil solche Getriebestufen sehr robust sind. Vorteilhaft ist zudem, dass Getriebe mit diesen Getriebestufen stabil laufen und eine hohe Lebensdauer besitzen.

Vorteilhafterweise sind das Sonnenrad und das Zentralrad auf der zentralen Achse angeordnet. Dabei kämmt das Sonnenrad mit dem mindestens einen Planetenrad, wobei die Achse des Planetenrads ortsfest angeordnet ist und wobei das Planetenrad mit dem Hohlrad kämmt. Das Hohlrad bildet mit dem Zentralrad ein Kräftepaar, das auf das umlaufende Zahnrad wirkt, wodurch das umlaufende Zahnrad in Bewegung versetzt werden kann. Vorteilhaft ist dabei, dass das Antriebsmoment über die Verzahnung eingeleitet wird und nicht über Lager.

Ein weiterer Vorteil besteht darin, wenn ein Gleitstein der ersten Getriebestufe drehbar auf dem Zapfen angebracht ist und auf einer Abtriebsseite in einer Führung angeordnet ist und diese Führung mit einer Abtriebswelle verbunden ist. Das umlaufende Zahnrad ist dabei über eine Scheibe mit dem exzentrisch angeordneten Zapfen verbunden. Eine solche Anordnung erzeugt als Abrollbahn des Zapfens eine epizykloide Bewegung. Vorteilhafterweise kann der Zapfen in einer Führung aufgenommen werden, wobei die Drehachse der Führung auf der zentralen Achse liegt und besonders vorteilhafterweise die Führung durch die zentrale Achse geht und in seiner Ausdehnung gerade ist. Durch die Aufnahme des Zapfens in einer Führung lässt sich auf eine besonders einfache Weise eine epizykloide Abrollbahn des Zapfens in eine reziproke Drehbewegung mit einem Vorwärtswinkel und einem Rückwärtswinkel umwandeln. Besonders vorteilhafterweise kann auf dem Zapfen ein Gleitstein drehbar angebracht werden, wobei nun der Gleitstein in der Führung aufgenommen wird, weil eine solche Anordnung besonders robust ist.

Bevorzugt werden die Verzahnungen der Zahnräder mit einem Modul von m=0,1mm bis m=1,0mm ausgeführt. Vorzugsweise liegt das Modul zwischen m=0,2mm und m=0,3mm und besonders bevorzugt beträgt das Modul m=0,25mm, um eine optimale Ausnutzung des Bauraums und der Lebensdauer zu erreichen.

Besonders bevorzugt wird das Hohlrad in radialer Richtung auf den Planetenrädern oder auf einer Fläche des Getriebegehäuses gelagert. Das Hohlrad ist dabei vorteilhafterweise gleitgelagert. Eine solche Lagerung hat den Vorteil, dass sie einfach aufgebaut ist und eine hohe Lebensdauer aufweist.

In einer weiteren bevorzugten Ausführungsform kann das Hohlrad in radialer Richtung über Kugellager oder Gleitlager im Gehäuse gelagert sein. Es handelt sich hierbei um eine weitere einfach zu realisierende Lagerung des Hohlrads, die zudem eine hohe Lebensdauer besitzt.

In einer besonderen Ausführungsform ist das Hohlrad über Kugellager oder Gleitlager in einer Lagerschale oder in einem Getriebedeckel gelagert. Auch diese Anordnung ist einfach zu realisieren und besitzt eine hohe Lebensdauer.

In einer weiteren Ausführungsform ist das umlaufende Zahnrad in einer Lagerschale gelagert, wobei die Lagerschale auf einer Achse angeordnet ist. Durch diese Lagerschale wird das Zahnrad stabil auf der Achse gehalten.

Bevorzugt ist die Lagerschale frei drehbar gelagert. Dies hat den Vorteil dass sich der Verschleiß verringert und die Lebensdauer des Getriebes erhöht wird.

Besonders bevorzugt ist die Lagerschale auf einem Lagerzapfen gelagert. Dadurch ist die Lagerschale - trotz freier Drehbarkeit - stabil in dem Getriebe angeordnet.

In einer weiteren Ausführungsform ist die Lagerschale auf einer Gleitfläche eines Getriebegehäuses gelagert. Dadurch ist die Lagerschale keinen Kippmomenten ausgesetzt, wodurch das Getriebe zusätzlich stabilisiert wird.

In einer besonderen Ausführungsform ist in der Lagerschale mindestens ein Planetenrad der ersten Getriebestufe angeordnet. Dieses mindestens eine Planetenrad steht zusammen mit dem umlaufenden Zahnrad sowohl mit dem Hohlrad als auch mit dem zweiten Zentralrad im Eingriff. Durch diese Lagerschale ist die erste Getriebestufe stabil in dem Getriebe angeordnet, weil das Hohlrad und seine Achse stabilisiert werden. Durch das Bereitstellen der Lagerschale kann zudem auf eine weitere Lagerung des Hohlrads verzichtet werden.

In einer weiteren besonderen Ausführungsform ist eine Lagerschale zum Lagern einer Welle vorgesehen, wobei die Welle an dem umlaufenden Zahnrad angeordnet ist. Durch diese Lagerschale ist gewährleistet, dass die Welle und damit auch das umlaufende Zahnrad stabil laufen.

Kurze Beschreibung der Zeichnungen Ausführungsbeispiele des erfindungsgemäßen zahnärztlichen Präparationsinstruments werden anhand von Zeichnungen erläutert. Es zeigen:
- Fig. 1: eine perspektivische Ansicht eines zahnärztlichen Präparationsinstruments,
- Fig. 2: einen Ausschnitt des in Figur 1 dargestellten zahnärztlichen Präparationsinstruments mit einer ersten Variante eines Getriebes,
- Fig. 3: einen Ausschnitt des in Figur 1 dargestellten zahnärztlichen Präparationsinstruments mit einer zweiten Variante eines Getriebes,
- Fig. 4: einen Ausschnitt des in Figur 1 dargestellten zahnärztlichen Präparationsinstruments mit einer dritten Variante eines Getriebes und
- Fig. 5: einen Ausschnitt des in Figur 1 dargestellten zahnärztlichen Präparationsinstruments mit einer vierten Variante eines Getriebes.

### Ausführungsbeispiel

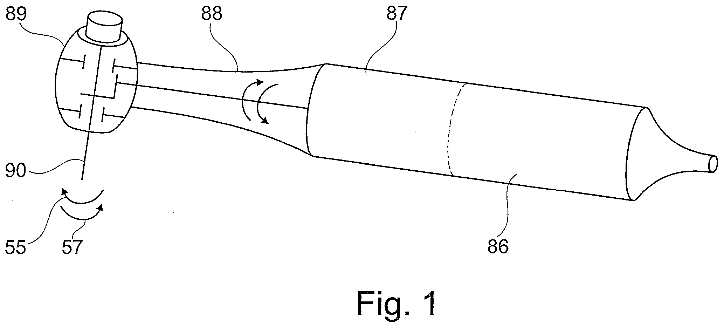

Figur 1 zeigt eine perspektivische Ansicht eines zahnärztlichen Präparationsinstruments 1, das aus mehreren Abschnitten 86 bis 89 besteht. In dem Abschnitt 86 sitzt ein Motor mit einer Motorkupplung, wobei der Abschnitt 86 mit einem nicht näher bezeichneten Schlauch oder Akku verbunden ist. In dem Abschnitt 86 können auch weitere Getriebestufen untergebracht sein. Benachbart zu dem Abschnitt 86 befindet sich ein Getriebeabschnitt 87, in dem ein Getriebe untergebracht ist. Zwischen den beiden Abschnitten 87 und 86 können noch weitere Abschnitte angeordnet sein, beispielsweise ein Abschnitt mit einem Planetengetriebe als Über- oder Untersetzungsgetriebe. An dem Getriebeabschnitt 87 ist ein Zwischenabschnitt 88 angebracht, das den Getriebeabschnitt 87 mit einem Kopfstück 89 verbindet. An dem Kopfstück 89 ist ein Werkzeug 90, vorzugsweise eine Endo-Feile, angeordnet. Dieses Werkzeug 90 führt eine reziproke Drehbewegung aus, die durch die Pfeile 55 und 57 angedeutet ist.

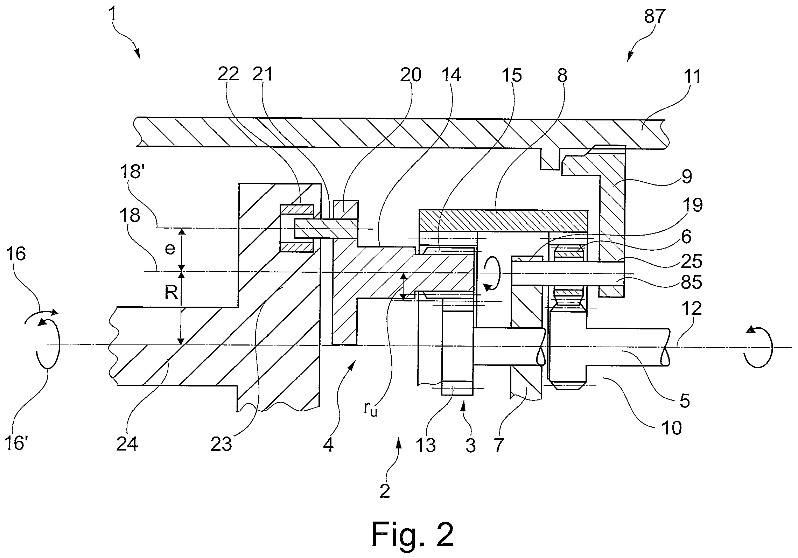

Figur 2 zeigt einen Ausschnitt eines Innenlebens des Getriebeabschnitts 87 des in Figur 1 dargestellten zahnärztlichen Präparationsinstruments 1, wobei dieser Getriebeabschnitt 87 nur schematisch dargestellt ist. In dem Getriebeabschnitt 87 ist eine erste Variante eines Getriebes 2 angeordnet. Weil das Getriebe 2 symmetrisch aufgebaut ist, ist der Übersicht halber nur eine Hälfte des Getriebes 2 dargestellt. Auf die Darstellung der anderen Getriebehälfte wurde aufgrund der Symmetrie verzichtet.

Das Getriebe 2 weist eine erste Getriebestufe 4 sowie eine zweite Getriebestufe 3 auf. Die zweite Getriebestufe 3 umfasst ein erstes Sonnenrad 5 sowie zumindest ein Planetenrad 6. Das Sonnenrad 5 kann dabei auch als ein erstes Zentralrad 5 bezeichnet werden. In Figur 2 ist nur ein Planetenrad 6 zu sehen, wobei die zweite Getriebestufe 3 vorzugsweise drei Planetenräder aufweist.

Die Achsen der Planetenräder sind fixiert und die Planetenräder 6 sind drehbar auf einer als Stift ausgebildete Welle 85 gelagert. Die Welle 85 kann mit dem Getriebedeckel 9 oder mit der Scheibe 7 oder mit beiden gleichzeitig fest verbunden sein. Vorteilhafterweise ist die Scheibe 7 eine Auskragung des Getriebedeckels 9. Der Getriebedeckel 9 weist eine Bohrung 25 auf und die Auskragung 7 eine Bohrung 19. Dabei kann auch auf eine der beiden Bohrungen 25, 19 verzichtet werden. Vorteilhafterweise liegen jedoch beide Bohrungen 25, 19 vor, so dass die Achsen der Bohrungen 25 und 19 auf einer gemeinsamen Achse liegen. Die Welle 85 wird in der Bohrung 25 oder der Bohrung 19 oder aber in beide Bohrungen 25, 19 gleichzeitig verdreh- und verschiebefest eingebracht. Das durch die Antriebswelle angetriebene Sonnenrad 5 versetzt die Planetenräder 6 in Rotation, wobei sich das Sonnenrad 5 um eine zentrale Achse 12 dreht. Die Planetenräder 6 greifen dabei mit einer Außenverzahnung in eine Innenverzahnung eines Hohlrads 8 ein. Das Hohlrad 8 ist ebenfalls Bestandteil der zweiten Getriebestufe 3. Die als Scheibe ausgebildete Auskragung 7 ist über die Welle 85 mit einem Getriebedeckel 9 verbunden, wobei der Getriebedeckel 9 eine Öffnung 10 eines Getriebegehäuses 11 zumindest teilweise abdeckt. Das Hohlrad 8 kann dabei auf den Planetenrädern 6 gelagert oder auch auf einer Fläche des Gehäuses 11 gelagert sein. Vorzugsweise ist das Hohlrad 8 wie dargestellt auf den Planetenrädern der zweiten Getriebestufe 3 gelagert.

Das Sonnenrad 5, die Planetenräder 6 und das Hohlrad 8 bilden somit die zweite Getriebestufe 3.

Die erste Getriebestufe 4 des Getriebes 2 enthält ein zweites allerdings feststehendes Sonnenrad 13, das im Weiteren als Zentralrad 13 bezeichnet wird sowie ein umlaufendes Zahnrad 15. Möglich ist aber auch, dass die erste Getriebestufe 4 ebenfalls Planetenräder enthält (nicht dargestellt). Das Hohlrad 8 ist dann in radialer Richtung sowohl auf den Planetenrädern 6 der zweiten Getriebestufe 3 als auch auf den Planetenrädern der ersten Getriebestufe 4 gelagert. Das Verbindungsstück 7 kann dabei mit dem Gehäuse 11 einteilig ausgebildet sein.

In der ersten Getriebestufe 4 ist das Zahnrad 15 derart angeordnet, dass dieses sowohl das Hohlrad 8 als auch das feststehende zweite Zentralrad 13 kämmt. Über das Hohlrad 8 wird das umlaufende Zahnrad 15 in Bewegung versetzt, wobei diese Bewegung zum einen eine umlaufende Bewegung um die zentrale Achse 12 des Sonnenrads 5 bildet und zum anderen auch eine Drehbewegung um eine eigene Achse 18 umfasst. Wie in Figur 2 zu erkennen, ist die zweite Getriebestufe 3 der ersten Getriebestufe 4 in Bezug auf die Abtriebswelle 24 vorgeschaltet. Diese Abtriebswelle 24 liegt auf der zentralen Achse 12.

Die Achse 18 des umlaufenden Zahnrads 15 wird über die Verzahnung parallel zur zentralen Achse 12 gehalten, wodurch keine separate Lagerung des Zahnrads 15 und der Welle 14 erforderlich ist. Obwohl in Figur 2 nicht dargestellt, so ist aus Symmetriegründen vorzugsweise ein weiteres Zahnrad mit einer Welle vorgesehen, das dem Zahnrad 15 mit der Welle 14 gegenüberliegt. Über die Verzahnung wird ein Drehmoment eingeleitet. Zum Stabilisieren der Achse 18 des umlaufenden Zahnrads 15 wird die Zahnbreite des umlaufenden Zahnrads 15, des Hohlrads 8 sowie des Zentralrads 13 erhöht.

Vorteilhafterweise liegt die Zahnbreite B zwischen 4. m ≤ B ≤ 20· m, wobei besonders vorteilhaft ist, wenn die Zahnbreite B = 8· m beträgt. Die Achse 18 ist so parallel zur zentralen Achse 12 angeordnet.

Auf das exzentrisch angeordnete Zahnrad 15 wirkt somit ein Kräftepaar, das aus dem Hohlrad 8 und dem Zentralrad 13 besteht, wodurch das umlaufende Zahnrad 15 in Bewegung versetzt wird. Dieses Kräftepaar wirkt deshalb als Drehmoment.

Auf dem umlaufenden Zahnrad 15 sind eine Welle 14 sowie eine Scheibe 20 mit einem exzentrischen Zapfen 21 angeordnet. Eine Achse 18' des Zapfens 21 weist zur Achse 18 des umlaufenden Zahnrads 15 einen Abstand e auf. Die Achse 18 des umlaufenden Zahnrads 15 hat zur zentralen Achse 12 einen Abstand R. Auf dem Zapfen 21 ist ein Gleitstein 22 in einem Schiebesitz derart angeordnet, dass sich der Gleitstein 22 frei auf dem Zapfen 21 drehen kann. Der Gleitstein 22 ist dabei auf der Abtriebsseite in einer Führung 23 der Abtriebswelle 24 eingebracht, wodurch die Bewegung des Gleitsteins 22 auf die Abtriebswelle 24 mit der Führung 23 übertragen werden kann. An der Abtriebswelle 24 sind weitere Komponenten des Antriebsstranges angeordnet, so dass am Ende des Antriebsstranges das Werkzeug (nicht gezeigt) angebracht werden kann. Die Abtriebswelle 24 führt relativ zur zentralen Achse 12 eine Drehbewegung mit wechselnder Drehrichtung aus (Pfeile 16 und 16'). Damit jedoch ein Wechsel der Drehrichtung entsteht, muss der Achsenabstand e größer als der Walzkreisradius rᵤ des umlaufenden Zahnrads 15 sein.

Es versteht sich, dass die Getriebestufe 3 auch mehr als drei Planetenräder aufweisen kann, wobei die Planetenräder gleichmäßig oder auch ungleichmäßig verteilt sein können.

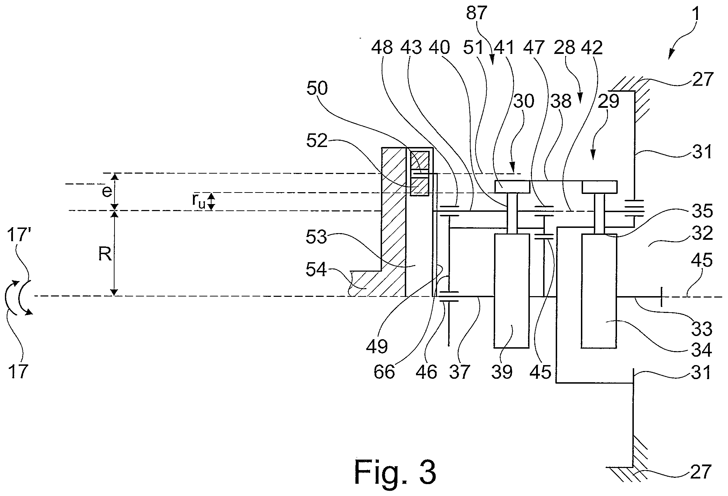

In Figur 3 ist ein Ausschnitt des Getriebeabschnitts 87 des in Figur 1 dargestellten zahnärztlichen Präparationsinstruments 1 dargestellt. In dem Getriebeabschnitt 87 ist eine zweite Variante eines Getriebes 28 untergebracht. Das Getriebe 28 ist von einem Getriebegehäuse 27 umgeben, das nur ausschnittsweise dargestellt ist. Das Gehäuse 27 besitzt an einem Ende 32 einen Gehäusedeckel 31. Das Getriebe 28 des zahnärztlichen Präparationsinstruments 1 enthält eine erste Getriebestufe 30 und eine zweite Getriebestufe 29.

Die zweite Getriebestufe 29 umfasst ein erstes Sonnenrad 34, ein Hohlrad 38 sowie Planetenräder, wobei in Figur 3 nur das Planetenrad 35 zu sehen ist. Das erste Sonnenrad 34 kann auch als erstes Zentralrad 34 bezeichnet werden. Vorzugsweise besitzt die zweite Getriebestufe 29 drei Planetenräder. Die Planetenräder 35 greifen in eine Innenverzahnung des Hohlrads 38 ein. Das Hohlrad 38 wird auf den Planetenrädern 35 gelagert. An einem Ende der zweiten Getriebestufe 29 greift eine Antriebswelle 33 ein. Die Planetenräder 35 der zweiten Getriebestufe 29 sind auf dem Getriebedeckel 31 angebracht.

Die erste Getriebestufe 30 des Getriebes 28 enthält ein zweites feststehendes Sonnenrad, das im Folgenden als zweites Zentralrad 39 bezeichnet wird und ein umlaufendes Zahnrad 15. Das Hohlrad 38 ist in radialer Richtung auf den Planetenrädern 35 der zweiten Getriebestufe 29 gelagert, wobei in der Figur 3 das umlaufende Zahnrad 40 mit einer Verzahnung 41 des Hohlrads 38 im Eingriff steht. Über die Verzahnung des Hohlrad 38 sowie der Verzahnung des Zentralrads 39 wird auf das umlaufende Zahnrad 40 ein Drehmoment eingeleitet.

Eine Achse 42 eines umlaufenden Zahnrads 40 wird über eine Lagerschale 66 parallel zu einer zentralen Achse 45 gehalten. Die Lagerschale 66 läuft mit dem umlaufenden Zahnrad 40 mit. Die Lagerschale 66 wird auf Lagerflächen 45, 46 des Lagerzapfens 37 gelagert. Der Lagerzapfen 37 nimmt neben der Lagerschale 66 auch das zentrale Zahnrad 39 sowie die Planetenräder 35 der zweiten Getriebestufe 29 auf.

Die Lagerschale 66 dient zur Stabilisierung der Achse 42 des umlaufenden Zahnrads 40 und verhindert dadurch Verkippungen, die aufgrund von ungünstigen Reaktionskräften in der ersten Getriebestufe 30 hervorgerufen werden können. Zu erkennen sind zwei weitere Lagerflächen 47, 48 der Lagerschale 66, wobei diese beiden Lagerflächen 47, 48 möglichst weit voneinander entfernt angeordnet sind und dazu dienen, eine Welle 43 des umlaufenden Zahnrades 40 mit den Gleitflächen 47 und 48 aufzunehmen und zu lagern.

Auf dem umlaufenden Zahnrad 40 sind eine Welle 43 sowie eine Scheibe 49 mit einem exzentrischen Zapfen 50 angeordnet. Eine Achse 51 des Zapfens 50 weist zur Achse 42 des umlaufenden Zahnrads 40 einen Abstand e auf. Die Achse 42 des umlaufenden Zahnrads 40 hat zur zentralen Achse 45 einen Abstand R, wobei R größer als e ist. Auf dem Zapfen 50 ist ein Gleitstein 52 in einem Schiebesitz derart angeordnet, dass er sich frei auf dem Zapfen 50 drehen kann. Der Gleitstein 52 ist auf der Abtriebsseite in einer Führung 53 der Abtriebswelle 54 eingebracht, wodurch die Bewegung des Gleitsteins 52 auf die Abtriebswelle 54 mit der Führung 53 übertragen werden kann. An der Abtriebswelle 54 sind weitere Komponenten des Antriebsstranges angeordnet, so dass am Ende des Antriebsstranges das Werkzeug (nicht gezeigt) angebracht werden kann. Die Abtriebswelle 54 führt relativ zur zentralen Achse 45 eine Drehbewegung mit wechselnder Drehrichtung aus (Pfeile 17 und 17'). Damit jedoch dieser Wechsel der Drehrichtung entstehen kann, muss der Achsenabstand e größer als der Walzkreisradius rᵤ des umlaufenden Zahnrads 40 sein, siehe auch Fig. 3.

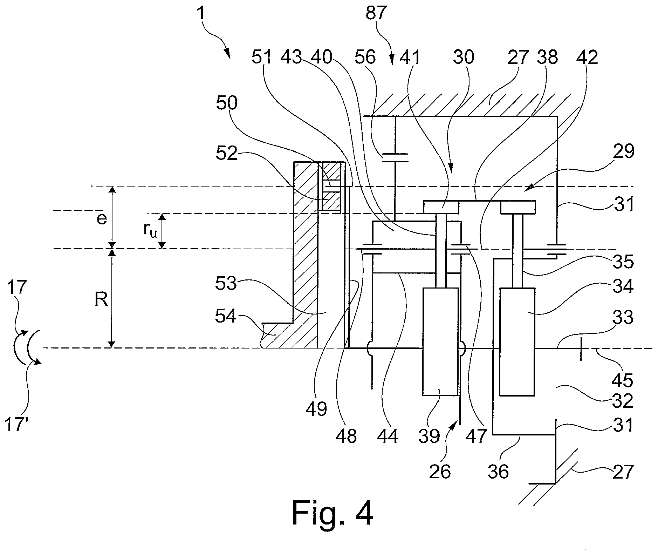

Figur 4 zeigt einen Ausschnitt des in Figur 1 dargestellten zahnärztlichen Präparationsinstruments 1 mit dem Getriebeabschnitt 87, in dem eine dritte Variante eines Getriebes 26 sitzt. Da der Aufbau des Getriebes 26 im Wesentlichen dem in Figur 3 gezeigten Getriebe entspricht, wurden die meisten Bezugszahlen beibehalten.

Allerdings weist diese Variante des Getriebes 26 eine Lagerschale 44 auf, die im Gehäuse 27 auf einer Lagerfläche 56 gelagert ist. Auch bei dieser Variante ist das Hohlrad 38 auf den Planetenrädern 35 der zweiten Getriebestufe 29 gelagert.

Ein Kräftepaar, das aus dem Hohlrad 38 und dem zentralen Zahnrad 39 gebildet wird, wirkt auch bei dieser Variante auf das exzentrisch angeordnete Zahnrad 40 ein und erzeugt ein Drehmoment.

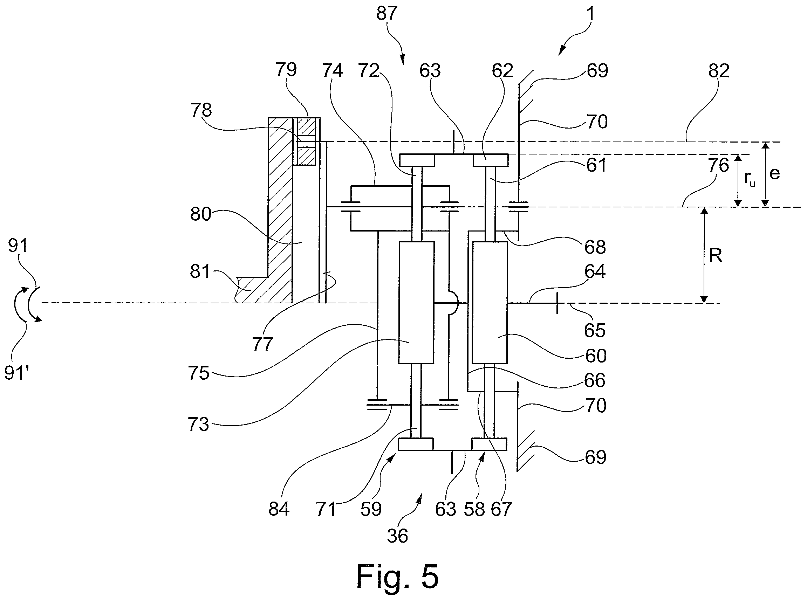

In Figur 5 ist ein Ausschnitt des Getriebeabschnitts 87 des in Figur 1 dargestellten zahnärztlichen Präparationsinstruments 1 gezeigt. In diesem Getriebeabschnitt 87 ist eine vierte Variante eines Getriebes 36 mit einer zweiten Getriebestufe 58 sowie einer ersten Getriebestufe 59 untergebracht. Die zweite Getriebestufe 58 umfasst ein erstes Sonnenrad 60, an dem mehrere Planetenräder angeordnet sind, wobei in der Figur 5 nur das Planetenrad 61 zu sehen ist, das über eine Verzahnung 62 mit einem Hohlrad 63 verbunden ist. Das erste Sonnenrad 60 kann dabei auch als erstes Zentralrad 60 bezeichnet werden. Das Hohlrad 63 ist ebenfalls Teil der zweiten Getriebestufe 58 und ist vorzugsweise auf den Planetenrädern gelagert. Das Sonnenrad steht mit den Planetenrädern 61 im Eingriff und treibt über diese Planetenräder das Hohlrad 63 an. Die Planetenräder 61 sind am Getriebedeckel 70 angeordnet wobei die Achse der Planetenräder 61 fest ist. Das Sonnenrad 60 wird über eine Welle 64 angetrieben, wodurch sich das Sonnenrad 60 um eine zentrale Achse 65 dreht. Über die Bewegung des Sonnenrads 60 wird letztendlich das Hohlrad 63 angetrieben, das wiederum die erste Getriebestufe 59 in Bewegung versetzt. Ein feststehendes zweites Zentralrad 73 ist über Verbindungsstücke 67, 68 mit einem Gehäusedeckel 70 verbunden. Der Deckel 70 ist zwischen zwei Abschnitten einer Gehäusewand 69 angeordnet.

Die erste Getriebestufe 59 enthält vorzugsweise eine Lagerschale 75. Bevorzugt sind in der Lagerschale 75 das umlaufende Zahnrad 72 mit der umlaufenden Welle 74 angeordnet, wobei besonders vorteilhafterweise in der Lagerschale 75 zusätzlich zum umlaufenden Zahnrad 72 zumindest ein Planetenrad 71 angeordnet ist. Vorteilhafterweise ist sowohl das Hohlrad 63 als auch die Lagerschale 75 über die Planetenräder 61 der zweiten Getriebestufe 58 sowie über das zumindest eine Planetenrad 71 der ersten Getriebestufe 59 gelagert. Dabei wird das Hohlrad 63 über die Verzahnung gelagert, wohingegen die Lagerschale 75 über die Wellen 84 der Planetenräder 71 und über das umlaufende Zahnrad 72 gelagert ist. Obwohl an dem Sonnenrad 73 nur ein Planetenrad 71 angeordnet sein kann, so besitzt das Sonnenrad 73 vorzugsweise mehr als ein Planetenrad, zum Beispiel zwei Planetenräder. Auch bei der ersten Getriebestufe 59 ist das Hohlrad 63 mit einer Innenverzahnung versehen und wird über das zumindest eine Planetenrad 71 und das umlaufende Zahnrad 72 gelagert.

Die Achse 76 des umlaufenden Zahnrads 72 hat zur zentralen Achse 65 wiederum einen Abstand R. An dem umlaufenden Zahnrad 72 ist über eine Welle 74 eine Scheibe 77 mit einem exzentrischen Zapfen 78 angeordnet. Eine Achse 82 des Zapfens 78 weist zur Achse 76 des umlaufenden Zahnrads 72 einen Abstand e auf. Auf dem Zapfen 78 ist ein Gleitstein 79 in einem Schiebesitz derart angeordnet, dass er sich frei auf dem Zapfen 78 drehen kann. Der Gleitstein 79 ist dabei auf der Abtriebsseite in einer Führung 80 der Abtriebswelle 81 eingebracht, wodurch die Bewegung des Gleitsteins 79 auf die Abtriebswelle 81 mit der Führung 80 übertragen werden kann. An der Abtriebswelle 81 sind weitere Komponenten des Antriebsstranges angeordnet, so dass am Ende des Antriebsstranges das Werkzeug (nicht gezeigt) befestigt werden kann. Die Abtriebswelle 81 führt relativ zur zentralen Achse 65 eine Drehbewegung mit wechselnder Drehrichtung aus (Pfeile 91 und 91'). Damit jedoch ein Wechsel der Drehrichtung entstehen kann, muss der Achsenabstand e größer als der Walzkreisradius rᵤ des umlaufenden Zahnrads 72 sein.

Die Lagerschale 75 ist auf dem zumindest einen Planetenrad 71 gelagert, wobei das zumindest eine Planetenrad 71 in der ersten Getriebestufe 59 auf einer Höhe mit dem umlaufenden Zahnrad 72 angeordnet ist, das heißt, dass das Zahnrad 72 und das Planetenrad 71 den gleichen Achsenabstand haben. Diese Variante ist jedoch in der Figur 5 nicht dargestellt. Vorteilhafterweise sind in der ersten Getriebestufe 59 zwei umlaufende Zahnräder 72 angeordnet, wobei die Position der Achsen der beiden umlaufenden Zahnräder 72 um 180° gegeneinander verschoben ist. Die beiden Zahnräder 72 liegen sich damit in Bezug auf die zentrale Achse 65 gegenüber. Vorzugsweise sind in der ersten Getriebestufe 59 zudem zwei Planetenräder 71 angeordnet, wobei die Position der Achsen der beiden Planetenräder um 180° gegeneinander verschoben ist. Bezogen auf die zentrale Achse 65 liegen sich die beiden Planetenräder somit gegenüber. In Bezug auf die beiden sich gegenüberliegenden umlaufenden Zahnräder 72 sind die Planetenräder 71 um 90° verschoben angeordnet.

Des Weiteren ist es möglich, dass bei dem zahnärztlichen Präparationsinstrument das Hohlrad separat gelagert ist, was jedoch nicht dargestellt ist. In diesem Fall kann das Hohlrad über Kugellager oder über Gleitlager im Gehäuse gelagert sein. Vorzugsweise wird eine solche Lagerung des Hohlrads bei den in den Figuren 2 bis 4 beschriebenen Varianten verwirklicht.

Auch ist es möglich, dass das Hohlrad über Kugellager oder Gleitlager in der entsprechenden Lagerschale gelagert wird. Eine solche Anordnung kann bei den in den Figuren 3 bis 5 beschriebenen Varianten bereitgestellt werden.

### Bezugszeichenliste

- 1: Präparationsinstrument
- 2: Getriebe
- 3: Zweite Getriebestufe
- 4: Erste Getriebestufe
- 5: Sonnenrad
- 6: Planetenrad
- 7: Auskragung
- 8: Hohlrad
- 9: Getriebedeckel
- 10: Öffnung
- 11: Gehäuse
- 12: Achse
- 13: Zentralrad
- 14: Umlaufende Welle
- 15: Umlaufendes Zahnrad
- 16: Pfeil
- 16: Pfeil
- 17: Pfeil
- 17: Pfeil
- 18: Achse des umlaufenden Zahnrades
- 18: Achse des Zapfens 21
- 19: Bohrung
- 20: Scheibe
- 21: Zapfen
- 22: Gleitstein
- 23: Führung
- 24: Abtriebswelle
- 25: Bohrung
- 26: Getriebe
- 27: Gehäuse
- 28: Getriebe
- 29: Zweite Getriebestufe
- 30: Erste Getriebestufe
- 31: Gehäusedeckel
- 32: Ende
- 33: Zahnrad
- 34: Sonnenrad
- 35: Planetenrad
- 36: Getriebe
- 37: Lagerzapfen
- 38: Hohlrad
- 39: Zentralrad
- 40: Umlaufendes Zahnrad
- 41: Verzahnung
- 42: Achse
- 43: Welle des umlaufenden Zahnrades
- 44: Lagerschale
- 45: Achse
- 46: Lagerfläche
- 47: Lagerfläche
- 48: Lagerfläche
- 49: Scheibe
- 50: Zapfen
- 51: Achse
- 52: Gleitstein
- 53: Führung
- 54: Antriebswelle
- 55: Pfeil
- 56: Lagerfläche
- 57: Pfeil
- 58: Getriebestufe
- 59: Getriebestufe
- 60: Sonnenrad
- 61: Planetenrad
- 62: Verzahnung
- 63: Hohlrad
- 64: Welle
- 65: Achse
- 66: Lagerschale
- 67: Verbindungsstück
- 68: Verbindungsstück
- 69: Gehäusewand
- 70: Gehäusedeckel
- 71: Planetenrad
- 72: Umlaufendes Zahnrad
- 73: Zentralrad
- 74: Welle
- 75: Lagerschale
- 76: Achse
- 77: Scheibe
- 78: Zapfen
- 79: Gleitstein
- 80: Führung
- 81: Abtriebswelle
- 82: Achse
- 83:
- 84: Welle des Planetenrades
- 85: Welle
- 86: Erster Abschnitt
- 87: Getriebeabschnitt
- 88: Zwischenstück
- 89: Kopfstück
- 90: Werkzeug
- 91: Pfeil
- 91: Pfeil

## Patentansprüche

1. Zahnärztliches Präparationsinstrument (1) für eine abwechselnd umkehrende Rotation eines Werkzeugs (90), aufweisend ein Getriebe (2, 26, 28, 36) mit einer ersten Getriebestufe (4, 30, 59), wobei die erste Getriebestufe (4, 30, 59) ein Zentralrad (13, 29, 73) sowie ein umlaufendes Zahnrad (15, 40, 72) aufweist, wobei die Achse (18, 42, 76) des umlaufenden Zahnrads (15, 40, 72) einen Abstand R zu einer zentralen Achse (12, 45, 65) besitzt und wobei das umlaufende Zahnrad (15, 40, 72) mit einem exzentrisch angeordneten Zapfen (21, 50, 78) verbunden ist, wobei in dem Getriebe (2, 26, 28, 36) eine zweite Getriebestufe (3, 29, 58) vorgesehen ist und wobei die zweite Getriebestufe (3, 29, 58) ein Hohlrad (8, 38, 63), ein Sonnenrad (5, 34, 60) sowie mindestens ein Planetenrad (6, 35, 61) enthält, wobei das Sonnenrad (5, 34, 60) und das zweite Zentralrad (13, 39, 73) auf der zentralen Achse (12, 45, 65) angeordnet sind **dadurch gekennzeichnet, dass** das Sonnenrad (5, 34, 60) mit dem mindestens einen Planetenrad (6, 35, 61) kämmt, wobei die Achse des mindestens einen Planetenrads (6, 35, 61) ortsfest angeordnet ist und wobei das mindestens eine Planetenrad (6, 35, 61) mit dem Hohlrad (8, 38, 63) kämmt und dass das Hohlrad (8, 38, 63) mit dem zweiten Zentralrad (13, 39, 73) ein Kräftepaar bildet, wobei das Kräftepaar auf das umlaufende Zahnrad (15, 40, 72) wirkt, wodurch das umlaufende Zahnrad (15, 40, 72) in Bewegung versetzt ist.

2. Zahnärztliches Präparationsinstrument nach Patentanspruch 1, **dadurch gekennzeichnet, dass** die erste Getriebestufe (4, 30, 59) ein Gleitstein (22, 52, 79) aufweist, der drehbar auf dem exzentrisch angeordneten Zapfen (21, 50, 78) angebracht ist und auf einer Abtriebsseite in einer Führung (23, 53, 80) angeordnet ist und diese Führung (23, 53, 80) mit einer Abtriebswelle (24, 54, 81) verbunden ist, wobei das umlaufende Zahnrad (15, 40, 72) über eine Welle (14, 43, 74) mit einer Scheibe (49, 20, 77) verbunden ist, wobei an der Scheibe (49, 20, 77) der Zapfen (21, 50, 78) angeordnet

3. Zahnärztliches Präparationsinstrument nach Anspruch 1 oder 2, **dadurch gekennzeichnet, dass** das Modul m des umlaufenden Zahnrads (15, 40, 72) mindestens m=0,1mm bis m=1,0mm beträgt, vorzugsweise zwischen m=0,2mm und m=0,3mm liegt und besonders bevorzugt m=0,25mm ist.

4. Zahnärztliches Präparationsinstrument nach einem der Ansprüche 1 bis 3, **dadurch gekennzeichnet, dass** das Hohlrad (8, 38, 63) in radialer Richtung auf den Planetenrädern (6, 14, 35, 40, 51, 61, 72) gelagert ist.

5. Zahnärztliches Präparationsinstrument nach einem der Ansprüche 1 bis 4, **dadurch gekennzeichnet, dass** das Hohlrad (8, 38) in radialer Richtung über Kugellager oder Gleitlager in einem Gehäuse (1, 27, 69) gelagert ist.

6. Zahnärztliches Präparationsinstrument nach einem der Ansprüche 1 bis 5, **dadurch gekennzeichnet, dass** das Hohlrad (38, 63) über Kugellager oder Gleitlager in einer Lagerschale (44, 66, 75) oder in einem Getriebedeckel (9) gelagert ist.

7. Zahnärztliches Präparationsinstrument nach einem der Ansprüche 1 bis 6, **dadurch gekennzeichnet, dass** das umlaufende Zahnrad (15, 40, 72) in einer Lagerschale (44, 66, 75) gelagert ist, wobei die Lagerschale (44, 66, 75) auf einer Achse (45, 65) angeordnet ist.

8. Zahnärztliches Präparationsinstrument nach Anspruch 6, **dadurch gekennzeichnet, dass** die Lagerschale (44, 66, 75) frei drehbar gelagert ist.

9. Zahnärztliches Präparationsinstrument nach Anspruch 6, **dadurch gekennzeichnet, dass** die Lagerschale (66) auf einem Lagerzapfen (37) gelagert ist.

10. Zahnärztliches Präparationsinstrument nach Anspruch 6, **dadurch gekennzeichnet, dass** die Lagerschale (44) auf einer Gleitfläche (56) eines Getriebegehäuses (27) gelagert ist.

11. Zahnärztliches Präparationsinstrument nach Anspruch 6, **dadurch gekennzeichnet, dass** in der Lagerschale (75) mindestens ein Planetenrad (71) der ersten Getriebestufe (59) angeordnet ist und dieses mindestens eine Planetenrad (71) zusammen mit dem umlaufenden Zahnrad (72) sowohl mit dem Hohlrad (63) als auch mit dem zweiten Zentralrad (73) im Eingriff ist.

12. Zahnärztliches Präparationsinstrument nach einem der Ansprüche 1 bis 11, **dadurch gekennzeichnet, dass** eine Lagerschale (44) zum Lagern einer Welle (43) vorgesehen ist, wobei die Welle (43) in der Lagerschale (44) untergebracht ist und die Welle (43) an dem umlaufenden Zahnrad (40) angeordnet ist.

## Claims

1. Dental preparation instrument (1) for an alternately reversing rotation of a tool (90), comprising a gear mechanism (2, 26, 28, 36) having a first gear stage (4, 30, 59), wherein the first gear stage (4, 30, 59) comprises a central gear (13, 29, 73) and a revolving gear wheel (15, 40, 72), wherein the axle (18, 42, 76) of the revolving gear wheel (15, 40, 72) has a distance R from a central axle (12, 45, 65) and wherein the revolving gear wheel (15, 40, 72) is connected to an eccentrically arranged pin (21, 50, 78), wherein a second gear stage (3, 29, 58) is provided in the gear mechanism (2, 26, 28, 36) and wherein the second gear stage (3, 29, 58) includes a ring gear (8, 38, 63), a sun gear (5, 34, 60) and at least one planet gear (6, 35, 61), wherein the sun gear (5, 34, 60) and the second central gear (13, 39, 73) are disposed on the central axle (12, 45, 65), **characterized in that** the sun gear (5, 34, 60) meshes with the at least one planet gear (6, 35, 61), wherein the axle of the at least one planet gear (6, 35, 61) is disposed in a stationary manner and wherein the at least one planet gear (6, 35, 61) meshes with the ring gear (8, 38, 63), and **in that** the ring gear (8, 38, 63) and the second central gear (13, 39, 73) together form a force couple, wherein the force couple acts on the revolving gear wheel (15, 40, 72), as a result of which the revolving gear wheel (15, 40, 72) is set in motion.

2. Dental preparation instrument according to Claim 1, **characterized in that** the first gear stage (4, 30, 59) comprises a sliding block (22, 52, 79) that is rotatably mounted on the eccentrically arranged pin (21, 50, 78) and, on an output side, is disposed in a guide (23, 53, 80), said guide (23, 53, 80) being connected to an output shaft (24, 54, 81), wherein the revolving gear wheel (15, 40, 72) is connected to a disc (49, 20, 77) via a shaft (14, 43, 74), wherein the pin (21, 50, 78) is disposed on the disc (49, 20, 77).

3. Dental preparation instrument according to Claim 1 or 2, **characterized in that** the modulus m of the revolving gear wheel (15, 40, 72) is at least m = 0.1 mm to m = 1.0 mm, preferably between m = 0.2 mm and m = 0.3 mm and particularly preferably m = 0.25 mm.

4. Dental preparation instrument according to any of Claims 1 to 3, **characterized in that** the ring gear (8, 38, 63) is mounted on the planet gears (6, 14, 35, 40, 51, 61, 72) in radial direction.

5. Dental preparation instrument according to any of Claims 1 to 4, **characterized in that** the ring gear (8, 38) is mounted in a housing (1, 27, 69) in radial direction via ball bearings or sliding bearings.

6. Dental preparation instrument according to any of Claims 1 to 5, **characterized in that** the ring gear (38, 63) is mounted in a bearing shell (44, 66, 75) or in a gear cover (9) via ball bearings or sliding bearings.

7. Dental preparation instrument according to any of Claims 1 to 6, **characterized in that** the revolving gear wheel (15, 40, 72) is mounted in a bearing shell (44, 66, 75), wherein the bearing shell (44, 66, 75) is disposed on an axle (45, 65).

8. Dental preparation instrument according to Claim 6, **characterized in that** the bearing shell (44, 66, 75) is mounted so as to be freely rotatable.

9. Dental preparation instrument according to Claim 6, **characterized in that** the bearing shell (66) is mounted on a bearing pin (37).

10. Dental preparation instrument according to Claim 6, **characterized in that** the bearing shell (44) is mounted on a sliding surface (56) of a gear housing (27).

11. Dental preparation instrument according to Claim 6, **characterized in that** at least one planet gear (71) of the first gear stage (59) is disposed in the bearing shell (75) and, together with the revolving gear wheel (72), said at least one planet gear (71) is in engagement with both the ring gear (63) and the second central gear (73) .

12. Dental preparation instrument according to any of Claims 1 to 11, **characterized in that** a bearing shell (44) is provided to support a shaft (43), wherein the shaft (43) is accommodated in the bearing shell (44) and the shaft (43) is disposed on the revolving gear wheel (40).

## Revendications

1. Instrument pour préparation médicale dentaire (1) pour une rotation inversée alternée d'un outil (90), comprenant une transmission (2, 26, 28, 36) avec un premier étage de transmission (4, 30, 59), ledit premier étage de transmission (4, 30, 59) présentant une roue centrale (13, 29, 73) ainsi qu'une roue dentée périphérique (15, 40, 72), l'axe (18, 42, 76) de la roue dentée périphérique (15, 40, 72) étant à une distance R d'un axe central (12, 45, 65), et la roue dentée périphérique (15, 40, 72) étant reliée à un goujon excentré (21, 50, 78), un deuxième étage de transmission (3, 29, 58) étant prévu dans la transmission (2, 26, 28, 36), ledit deuxième étage de transmission (3, 29, 58) comprenant une couronne (8, 38, 63), une roue solaire (5, 34, 60) ainsi qu'au moins une roue planétaire (6, 35, 61), ladite roue solaire (5, 34, 60) et la deuxième roue centrale (13, 39, 73) étant disposées sur l'axe central (12, 45, 65) ; **caractérisé en ce que** la roue solaire (5, 34, 60) s'engrène avec l'au moins une roue planétaire (6, 35, 61), l'axe de l'au moins une roue planétaire (6, 35, 61) étant spatialement fixe, et l'au moins une roue planétaire (6, 35, 61) s'engrenant avec la couronne (8, 38, 63), et **en ce que** la couronne (8, 38, 63) forme un couple de forces avec la deuxième roue centrale (13, 39, 73), ledit couple de forces agissant sur la roue dentée périphérique (15, 40, 72), moyennant quoi la roue dentée périphérique (15, 40, 72) est mise en mouvement.

2. Instrument pour préparation médicale dentaire selon la revendication 1, **caractérisé en ce que** le premier étage de transmission (4, 30, 59) présente un coulisseau (22, 52, 79) monté rotatif sur le goujon excentré (21, 50, 78) et disposé, sur le côté mené, dans une glissière (23, 53, 80), laquelle glissière (23, 53, 80) est couplée avec un arbre mené (24, 54, 81) ; ladite roue dentée périphérique (15, 40, 72) étant reliée à un disque (49, 20, 77) par le biais d'un arbre (14, 43, 74), ledit goujon (21, 50, 78) étant disposé dans ledit disque (49, 20, 77).

3. Instrument pour préparation médicale dentaire selon la revendication 1 ou 2, **caractérisé en ce que** le module m de la roue dentée périphérique (15, 40, 72) est au moins compris dans la plage de m = 0,1 mm à m = 1,0 mm, de préférence dans la plage de m = 0,2 mm à m = 0,3 mm, en étant plus préférablement m = 0,25 mm.

4. Instrument pour préparation médicale dentaire selon l'une des revendications 1 à 3, **caractérisé en ce que** la couronne (8, 38, 63) est montée, dans la direction radiale, sur les roues planétaires (6, 14, 35, 40, 51, 61, 72).

5. Instrument pour préparation médicale dentaire selon l'une des revendications 1 à 4, **caractérisé en ce que** la couronne (8, 38) est montée, dans la direction radiale, sur des roulements à billes ou coussinets dans un boîtier (1, 27, 69).

6. Instrument pour préparation médicale dentaire selon l'une des revendications 1 à 5, **caractérisé en ce que** la couronne (38, 63) est montée, dans la direction radiale, sur des roulements à billes ou coussinets dans un demi-coussinet (44, 66, 75) ou un couvercle d'engrenages (9).

7. Instrument pour préparation médicale dentaire selon l'une des revendications 1 à 6, **caractérisé en ce que** la roue dentée périphérique (15, 40, 72) est montée dans un demi-coussinet (44, 66, 75), ledit demi-coussinet (44, 66, 75) étant disposé sur un axe (45, 65).

8. Instrument pour préparation médicale dentaire selon la revendication 6, **caractérisé en ce que** le demi-coussinet (44, 66, 75) est monté en rotation libre.

9. Instrument pour préparation médicale dentaire selon la revendication 6, **caractérisé en ce que** le demi-coussinet (66) est monté sur un tourillon (37).

10. Instrument pour préparation médicale dentaire selon la revendication 6, **caractérisé en ce que** le demi-coussinet (44) est monté sur une surface de coulissement (56) d'un carter d'engrenages (27).

11. Instrument pour préparation médicale dentaire selon la revendication 6, **caractérisé en ce qu'**au moins une roue planétaire (71) du premier étage de transmission (59) est disposée dans le demi-coussinet (75) et cette au moins une roue planétaire (71) conjointement à la roue dentée périphérique (72) est en prise avec la couronne (63) ainsi qu'avec la deuxième roue centrale (73).

12. Instrument pour préparation médicale dentaire selon l'une des revendications 1 à 11, **caractérisé en ce qu'**un demi-coussinet (44) est prévu afin de supporter un arbre (43), ledit arbre (43) logeant dans le demi-coussinet (44) et ledit arbre (43) étant disposé sur la roue dentée périphérique (40).
